# EUROPEAN PATENT SPECIFICATION

(11) **EP 2 702 784 B1**
(45) Date of publication and mention of the grant of the patent: **11.07.2018**
(21) Application number: 11864213.1
(22) Date of filing: 27.04.2011
(51) Int. Cl.: H04W 4/90, H04W 12/10, H04W 4/021

(54) **METHOD AND APPARATUS FOR PROVIDING A PUBLIC WARNING**
VERFAHREN UND VORRICHTUNG FÜR ÖFFENTLICHE WARNUNGEN
PROCÉDÉ ET APPAREIL POUR FOURNIR UNE ALERTE PUBLIQUE

(43) Date of publication of application: 05.03.2014
(73) Proprietor: Nokia Technologies Oy, 02610 Espoo (FI)
(72) Inventor: HOLTMANNS, Silke, FI-01800 Klaukkala (FI); ZHANG, Dajiang, Beijing 100102 (CN)
(74) Representative: Seppo Laine Oy
(86) International application number: PCT/CN2011/073398
(87) International publication number: WO 2012/145901

(56) References cited:
- WO-A1-2010/033062
- CN-A- 101 656 915
- CN-A- 101 938 740
- CN-A- 101 953 182
- US-A1- 2003 129 977
- US-B1- 7 764 185
- ERICSSON: "Analysis of ETWS security solutions", 3GPP DRAFT; S3-080365_ERI_ETWS_SECURITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Vancouver; 20080407, 7 April 2008 (2008-04-07), XP050280613, [retrieved on 2008-04-07]

## Description

### TECHNICAL FIELD

Embodiments of the present invention relate generally to communication technology, and, more particularly, relate to a method, apparatus, and computer program product for providing a secure public warning.

### BACKGROUND

The modern communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. In order to provide easier or faster information transfer and convenience, telecommunication industry service providers are developing improvements to existing networks. In this regard, for example, improvements are being made to the universal mobile telecommunications system (UMTS) terrestrial radio access network (UTRAN). Further, for example, the evolved-UTRAN (E-UTRAN) is currently being developed. The E-UTRAN, which is also known as Long Term Evolution (LTE), is aimed at upgrading prior technologies by improving efficiency, lowering costs, improving services, making use of new spectrum opportunities, and providing better integration with other open standards. One development in networks is the provision for localized base stations that may serve a smaller area than a typical macrocell, for example picocells, or that may be individually owned and deployed in homes and businesses, for example femtocells.

Many areas of technology stand to benefit significantly from the rapid growth of these networks. One area in particular relates to public warning systems, which generally provide alerts related to natural, and other, disasters. Current public warning systems may suffer from various deficiencies related to security, speed, and range.

Accordingly, it may be desirable to provide systems, methods, apparatuses, and computer program products for providing a secure public warning related to a disaster.

US7764185 B1 discloses a system for centralized distribution of warning messages. In this document, a warning and positioning device carried by an individual transmits its position and listens for warning messages. Responsive to a warning message, the warning and positioning device alerts its user. 3GPP document S3-080365 by Ericsson "Analysis of ETWS security solutions" discusses authentication of warning messages distributed using, for example, a MBMS/E-MBMS framework.

### SUMMARY

Network operators may wish to take advantage of the increasing breadth of network coverage to provide useful services to subscribers and the public alike. One such service involves providing warnings and alerts related to natural, and other, disasters to various entities in the network. A major concern for network operators, and government entities using these networks for such services, is avoiding warning services being overtaken by unauthorized entities, for example terrorist organizations wishing to hijack the warning systems and cause false panic. The network operator may also wish to distinguish from among numerous types of disasters when providing the warning so that recipients know what action to take. Additionally, the network operator may wish to avoid jamming or overloading of the network due to increased traffic during the warning period. Another concern for operators of warning systems is identifying the locations most damaged by the disaster in order to quickly deploy aid. A need, therefore, exists to allow a network operator to provide a secure public warning system that avoids the issues described above. Various embodiments of the present invention seek to offer solutions to the problem by providing apparatuses and methods for providing a secure public warning related to a disaster.

Methods, apparatuses, and computer program products are herein provided for providing a secure public warning related to a disaster. Systems, methods, apparatuses, and computer program products in accordance with various embodiments may provide several advantages to computing devices, computing device users, and network providers. Some example embodiments advantageously enable a network operator to provide secure, verified, and authenticated disaster warning messages. In accordance with some embodiments, the warning messages may provide an indication of the type of disaster to which the warning applies and the appropriate actions to take in response. Furthermore, example embodiments of the present invention may allow a network operator to receive reporting messages from users and dedicated alert nodes to help determine where aid should be deployed during and after the disaster.

In an example embodiment, a method is provided, which may comprise providing for transmission of a registration message. The registration message may comprise an indication of an identity and an indication of a location. The method of this example embodiment further comprises receiving a warning message. The method of this example embodiment may further comprise authenticating the warning message. The method of this example embodiment may further comprise providing an alert after authenticating the warning message, and providing for transmission of a status report message after successfully authenticating the warning message.

In another example embodiment, an apparatus comprising at least one processor and at least one memory storing computer program code is provided. The at least one memory and stored computer program code are configured, with the at least one processor, to cause the apparatus of this example embodiment to at least provide for transmission of a registration message. The registration message may comprise an indication of an identity and an indication of a location. The at least one memory and stored computer program code are configured, with the at least one processor, to further cause the apparatus of this example embodiment to receive a warning message. The at least one memory and stored computer program code may be configured, with the at least one processor, to additionally cause the apparatus of this example embodiment to authenticate the warning message. The at least one memory and stored computer program code are configured, with the at least one processor, to further cause the apparatus of this example embodiment to provide an alert after authenticating the warning message and to provide for transmission of a status report message after successfully authenticating the warning message.

In another example embodiment, a computer program product is provided. The computer program product of this example embodiment comprises at least one computer-readable storage medium having computer-readable program instructions stored therein. The program instructions of this example embodiment comprise program instructions configured to provide for transmission of a registration message. The registration message may comprise an indication of an identity and an indication of a location. The program instructions of this example embodiment further comprise program instructions configured to receive a warning message. The program instructions of this example embodiment may further comprise program instructions configured to authenticate the warning message. The program instructions of this example embodiment further comprise program instructions configured to provide an alert after authenticating the warning message and to provide for transmission of a status report message after successfully authenticating the warning message.

In another example embodiment, an apparatus is provided, which comprises means for providing for transmission of a registration message. The registration message comprises an indication of an identity and an indication of a location. The apparatus of this example embodiment further comprises means for receiving a warning message. The apparatus of this example embodiment may further comprise means for authenticating the warning message. The apparatus of this example embodiment further comprises means for providing an alert after authenticating the warning message, and means for providing for transmission of a status report message after successfully authenticating the warning message.

The above summary is provided merely for purposes of summarizing some example embodiments of the invention so as to provide a basic understanding of some aspects of the invention. Accordingly, it will be appreciated that the above described example embodiments are merely examples and should not be construed to narrow the scope or spirit of the invention in any way. It will be appreciated that the scope of the invention encompasses many potential embodiments, some of which will be further described below, in addition to those here summarized.

### BRIEF DESCRIPTION OF THE DRAWING(S)

Having thus described some example embodiments of the invention in general terms, reference will now be made to the accompanying drawings, which are not necessarily drawn to scale, and wherein:
FIG. 1 illustrates a system for providing a secure public warning related to a disaster according to some example embodiments of the present invention;
FIG. 2 illustrates a schematic block diagram of a mobile terminal according to some example embodiments of the present invention;
FIG. 3 illustrates a block diagram of a terminal apparatus, serving network apparatus, and a public warning system apparatus according to some example embodiments of the present invention; and
FIG. 4 illustrates a flowchart according to an example method for providing a secure public warning related to a disaster according to some example embodiments of the present invention.

### DETAILED DESCRIPTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout. The terms "data," "content," "information," and similar terms may be used interchangeably, according to some example embodiments of the present invention, to refer to data capable of being transmitted, received, operated on, and/or stored.

The term "computer-readable medium" as used herein refers to any medium configured to participate in providing information to a processor, comprising instructions for execution. Such a medium may take many forms, including, but not limited to a non-transitory computer-readable storage medium (for example, non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of computer-readable media include a floppy disk, a flexible disk, hard disk, magnetic tape, any other magnetic medium, a compact disc read only memory (CD-ROM), compact disc compact disc-rewritable (CD-RW), digital versatile disc (DVD), Blu-Ray, any other optical medium, punch cards, paper tape, optical mark sheets, any other physical medium with patterns of holes or other optically recognizable indicia, a random access memory (RAM), a programmable read only memory (PROM), an erasable programmable read only memory (EPROM), a FLASH-EPROM, any other memory chip or cartridge, a carrier wave, or any other medium from which a computer can read. The term computer-readable storage medium is used herein to refer to any computer-readable medium except transmission media. However, it will be appreciated that where embodiments are described to use a computer-readable storage medium, other types of computer-readable mediums may be substituted for or used in addition to the computer-readable storage medium in alternative embodiments.

As used herein, the term 'circuitry' refers to all of the following: (a) hardware-only circuit implementations (such as implementations in only analog and/or digital circuitry); (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

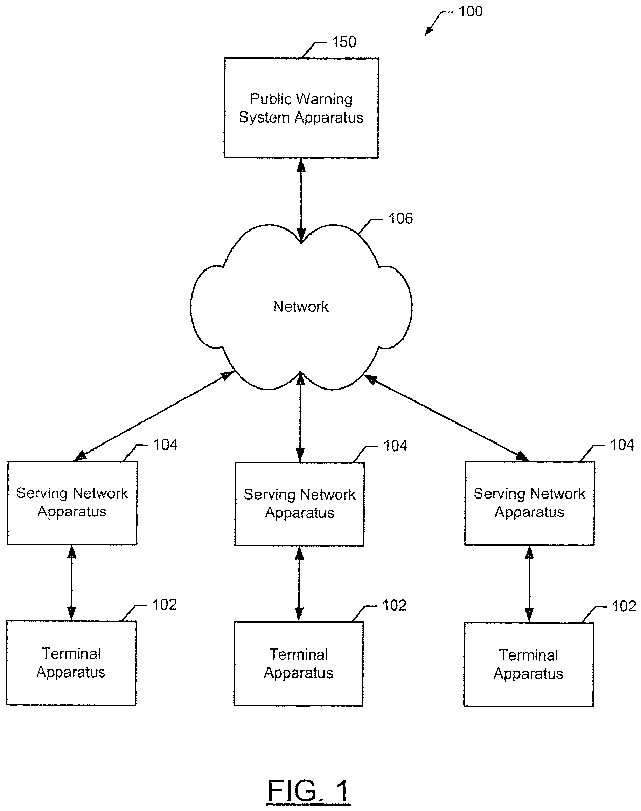

Referring now to FIG. 1, FIG. 1 illustrates a block diagram of a system 100 for providing a secure public warning related to a disaster according to an example embodiment. It will be appreciated that the system 100 as well as the illustrations in other figures are each provided as an example of one embodiment and should not be construed to narrow the scope or spirit of the disclosure in any way. In this regard, the scope of the disclosure encompasses many potential embodiments in addition to those illustrated and described herein. As such, while FIG. 1 illustrates one example of a configuration of a system for providing a secure public warning related to a disaster, numerous other configurations may also be used to implement embodiments of the present invention.

The system 100 may comprise a plurality of terminal apparatuses 102, a plurality of serving network apparatuses 104, and a plurality of public warning system apparatuses 150. The system 100 may further comprise a network 106. The network 106 may comprise one or more wireline networks, one or more wireless networks, or some combination thereof. The network 106 may, for example, comprise a serving network (e.g., a serving cellular network) for one or more terminal apparatuses 102. The network 106 may comprise, in certain embodiments, one or more of the terminal apparatuses 102, serving network apparatuses 104, and/or public warning system apparatuses 150 themselves. In some embodiments, the network 106 comprises a public land mobile network (PLMN) (for example, a cellular network), such as may be implemented by a network operator (for example, a cellular access provider). The network 106 may operate in accordance with Global System for Mobile communications (GSM), General Packet Radio Service (GPRS), universal terrestrial radio access network (UTRAN) standards, evolved UTRAN (E-UTRAN) standards, current and future implementations of Third Generation Partnership Project (3GPP) LTE (also referred to as LTE-A) standards, current and future implementations of International Telecommunications Union (ITU) International Mobile Telecommunications - Advanced (IMT-A) systems standards, and/or the like. It will be appreciated, however, that where references herein are made to a network standard and/or terminology particular to a network standard, the references are provided merely by way of example and not by way of limitation.

According to various embodiments, one or more terminal apparatuses 102 may be configured to connect directly with one or more other terminal apparatuses 102, one or more serving network apparatuses 104, and/or one or more public warning system apparatuses 150 via, for example, an air interface without routing communications via one or more elements of the network 106. Similarly, one or more serving network apparatuses 104 may be configured to connect directly with one or more other serving network apparatuses 104 and/or one or more public warning system apparatuses 150 via an air interface, and one or more public warning system apparatuses 150 may be configured to connect directly with one or more other public warning system apparatuses 150 via an air interface.

In other embodiments, one or more of the terminal apparatuses 102, one or more of the serving network apparatuses 104, and/or one or more public warning system apparatuses 150 may be configured to communicate with one another over the network 106. In this regard, the serving network apparatuses 104 and/or one or more public warning system apparatuses 150 may comprise one or more nodes of the network 106. For example, in some example embodiments, the serving network apparatuses 104 and/or one or more public warning system apparatuses 150 may be at least partially embodied on one or more computing devices that comprise an element of a radio access network (RAN) portion of the network 106. In this regard, the serving network apparatuses 104 and/or one or more public warning system apparatuses 150 may, for example, be at least partially embodied on an access point of the network 106 (for example, a macrocell base station, microcell base station, picocell base station, femtocell base station, base transceiver station (BTS), node B, evolved node B, and/or the like), which may, for example be configured to provide access to the network 106 (e.g., via a radio uplink) to one or more of the terminal apparatuses 102. Accordingly, each of the serving network apparatuses 104 and public warning system apparatuses 150 may comprise a network node or a plurality of network nodes collectively configured to perform one or more operations attributed to a serving network apparatus 104 or a public warning system apparatus 150 as described with respect to various example embodiments disclosed herein.

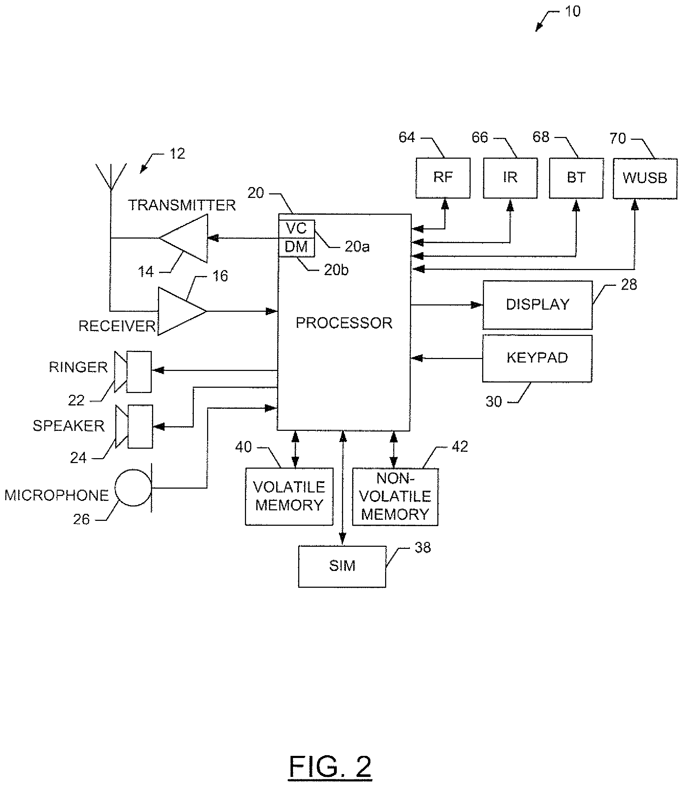

A terminal apparatus 102 may be embodied as any apparatus served by a serving network apparatus 104. For example, a terminal apparatus 102 may be embodied as any computing device, such as, for example, a desktop computer, laptop computer, mobile terminal, mobile computer, mobile phone, mobile communication device, game device, digital camera/camcorder, audio/video player, television device, radio receiver, digital video recorder, positioning device, wrist watch, portable digital assistant (PDA), any combination thereof, and/or the like. In certain embodiments, a terminal apparatus 102 may be embodied as an early warning sensor for disasters, for example a fire sensor, earthquake sensor, tsunami sensor, flood sensor, or the like. According to other embodiments, a terminal apparatus may be embodied as a warning device for distributing or broadcasting a warning, for example a speaker (e.g. a public speaker system), an alarm (e.g. a fire alarm), a siren (e.g. a tsunami siren), a light-emitting warning device (e.g. a flashing warning beacon), or the like. In an example embodiment, a terminal apparatus 102 may be embodied as a mobile terminal, such as that illustrated in FIG. 2.

In this regard, FIG. 2 illustrates a block diagram of a mobile terminal 10 representative of one embodiment of a terminal apparatus 102. It should be understood, however, that the mobile terminal 10 illustrated and hereinafter described is merely illustrative of one type of terminal apparatus 102 that may implement and/or benefit from various embodiments and, therefore, should not be taken to limit the scope of the disclosure. While several embodiments of the electronic device are illustrated and will be hereinafter described for purposes of example, other types of electronic devices, such as mobile telephones, mobile computers, portable digital assistants (PDAs), pagers, laptop computers, desktop computers, gaming devices, televisions, and other types of electronic systems, may employ various embodiments of the invention.

As shown, the mobile terminal 10 may comprise an antenna 12 (or multiple antennas 12) in communication with a transmitter 14 and a receiver 16. The mobile terminal 10 may also comprise a processor 20 configured to provide signals to and receive signals from the transmitter and receiver, respectively. The processor 20 may, for example, be embodied as various means including circuitry, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 2 as a single processor, in some embodiments the processor 20 comprises a plurality of processors. These signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques such as Institute of Electrical and Electronics Engineers (IEEE) 802.11, 802.16, and/or the like. In addition, these signals may include speech data, user generated data, user requested data, and/or the like. In this regard, the mobile terminal may be capable of operating with one or more air interface standards, communication protocols, modulation types, access types, and/or the like. More particularly, the mobile terminal may be capable of operating in accordance with various first generation (1G), second generation (2G), 2.5G, third-generation (3G) communication protocols, fourth-generation (4G) communication protocols, Internet Protocol Multimedia Subsystem (IMS) communication protocols (for example, session initiation protocol (SIP)), and/or the like. For example, the mobile terminal may be capable of operating in accordance with 2G wireless communication protocols IS-136 (Time Division Multiple Access (TDMA)), Global System for Mobile communications (GSM), IS-95 (Code Division Multiple Access (CDMA)), and/or the like. Also, for example, the mobile terminal may be capable of operating in accordance with 2.5G wireless communication protocols General Packet Radio Service (GPRS), Enhanced Data GSM Environment (EDGE), and/or the like. Further, for example, the mobile terminal may be capable of operating in accordance with 3G wireless communication protocols such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The mobile terminal may be additionally capable of operating in accordance with 3.9G wireless communication protocols such as Long Term Evolution (LTE) or Evolved Universal Terrestrial Radio Access Network (E-UTRAN) and/or the like. Additionally, for example, the mobile terminal may be capable of operating in accordance with fourth-generation (4G) wireless communication protocols such as LTE Advanced and/or the like as well as similar wireless communication protocols that may be developed in the future.

Some Narrow-band Advanced Mobile Phone System (NAMPS), as well as Total Access Communication System (TACS), mobile terminals may also benefit from embodiments of this invention, as should dual or higher mode phones (for example, digital/analog or TDMA/CDMA/analog phones). Additionally, the mobile terminal 10 may be capable of operating according to Wi-Fi or Worldwide Interoperability for Microwave Access (WiMAX) protocols.

It is understood that the processor 20 may comprise circuitry for implementing audio/video and logic functions of the mobile terminal 10. For example, the processor 20 may comprise a digital signal processor device, a microprocessor device, an analog-to-digital converter, a digital-to-analog converter, and/or the like. Control and signal processing functions of the mobile terminal may be allocated between these devices according to their respective capabilities. The processor may additionally comprise an internal voice coder (VC) 20a, an internal data modem (DM) 20b, and/or the like. Further, the processor may comprise functionality to operate one or more software programs, which may be stored in memory. For example, the processor 20 may be capable of operating a connectivity program, such as a web browser. The connectivity program may allow the mobile terminal 10 to transmit and receive web content, such as location-based content, according to a protocol, such as Wireless Application Protocol (WAP), hypertext transfer protocol (HTTP), and/or the like. The mobile terminal 10 may be capable of using a Transmission Control Protocol/Internet Protocol (TCP/IP) to transmit and receive web content across the internet or other networks.

The mobile terminal 10 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions (for example, software and/or firmware) stored on a memory accessible to the processor 20 (for example, volatile memory 40, non-volatile memory 42, and/or the like). Although not shown, the mobile terminal may comprise a battery for powering various circuits related to the mobile terminal, for example, a circuit to provide mechanical vibration as a detectable output. The user input interface may comprise devices allowing the mobile terminal to receive data, such as a keypad 30, a touch display (not shown), a joystick (not shown), and/or other input device. In embodiments including a keypad, the keypad may comprise numeric (0-9) and related keys (#, *), and/or other keys for operating the mobile terminal.

As shown in FIG. 2, the mobile terminal 10 may also comprise one or more means for sharing and/or obtaining data. For example, the mobile terminal may comprise a short-range radio frequency (RF) transceiver and/or interrogator 64 so data may be shared with and/or obtained from electronic devices in accordance with RF techniques. The mobile terminal may comprise other short-range transceivers, such as, for example, an infrared (IR) transceiver 66, a Bluetooth™ (BT) transceiver 68 operating using Bluetooth™ brand wireless technology developed by the Bluetooth™ Special Interest Group, a wireless universal serial bus (USB) transceiver 70 and/or the like. The Bluetooth™ transceiver 68 may be capable of operating according to ultra-low power Bluetooth™ technology (for example, Wibree™) radio standards. In this regard, the mobile terminal 10 and, in particular, the short-range transceiver may be capable of transmitting data to and/or receiving data from electronic devices within a proximity of the mobile terminal, such as within 10 meters, for example. Although not shown, the mobile terminal may be capable of transmitting and/or receiving data from electronic devices according to various wireless networking techniques, including Wi-Fi, WLAN techniques such as IEEE 802.11 techniques, IEEE 802.15 techniques, IEEE 802.16 techniques, and/or the like.

The mobile terminal 10 may comprise memory, such as a subscriber identity module (SIM) 38, a removable user identity module (R-UIM), and/or the like, which may store information elements related to a mobile subscriber. In addition to the SIM, the mobile terminal may comprise other removable and/or fixed memory. The mobile terminal 10 may comprise volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices (for example, hard disks, floppy disk drives, magnetic tape, etc.), optical disc drives and/or media, non-volatile random access memory (NVRAM), and/or the like. Like volatile memory 40 non-volatile memory 42 may include a cache area for temporary storage of data. The memories may store one or more software programs, instructions, pieces of information, data, and/or the like which may be used by the mobile terminal for performing functions of the mobile terminal. For example, the memories may comprise an identifier, such as an international mobile equipment identification (IMEI) code, capable of uniquely identifying the mobile terminal 10.

Various other embodiments of the terminal apparatus 102 apart from the example mobile terminal embodiment represented in FIG. 2 may similarly comprise one or more of the elements described above with respect to FIG. 2, as well as additional elements that may be necessary for the terminal apparatus 102 to provide a desired function specific to a given embodiment. For example, in embodiments where the terminal apparatus 102 may be embodied as an early warning sensor for disasters, the terminal apparatus 102 may further comprise sensing means (e.g. seismograph, water level detector, or smoke detector) to detect events related to a potential disaster. In embodiments where the terminal apparatus 102 may be embodied as a warning device, the terminal apparatus 102 may further comprise signal means for providing a warning, for example a siren, alarm, loud speaker, light emitting element, or the like.

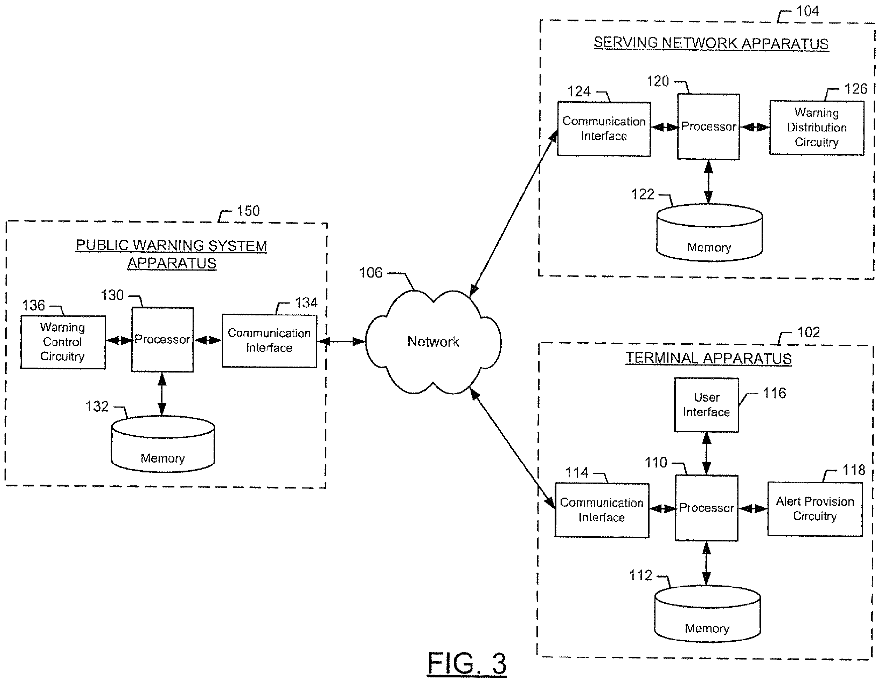

Referring now to FIG. 3, FIG. 3 illustrates a block diagram of various apparatuses (i.e. a terminal apparatus 102, a serving network apparatus 104, and a public warning system apparatus 150) of system 100 comprising a network 106 according to an example embodiment. As shown, the various apparatuses may communicate with one another via the network 106. In some embodiments, the apparatuses may be configured to further communicate with one another via an air interface without routing communications via one or more elements of the network 106. The various blocks of each example apparatus are described in turn below.

In the example embodiment, the terminal apparatus 102 comprises various means for performing the various functions herein described. These means may comprise one or more of a processor 110, memory 112, communication interface 114, user interface 116, or alert provisioning circuitry 118. The means of the terminal apparatus 102 as described herein may be embodied as, for example, circuitry, hardware elements (e.g., a suitably programmed processor, combinational logic circuit, and/or the like), a computer program product comprising computer-readable program instructions (e.g., software or firmware) stored on a computer-readable medium (for example memory 112) that is executable by a suitably configured processing device (e.g., the processor 110), or some combination thereof.

In some example embodiments, one or more of the means of the terminal apparatus 102 illustrated in FIG. 3 may be embodied as a chip or chip set. In other words, the terminal apparatus 102 may comprise one or more physical packages (for example, chips) including materials, components and/or wires on a structural assembly (for example, a baseboard). The structural assembly may provide physical strength, conservation of size, and/or limitation of electrical interaction for component circuitry included thereon. In this regard, the processor 110, memory 112, communication interface 114, user interface 116, and/or alert provisioning circuitry 118 may be embodied as a chip or chip set. The terminal apparatus 102 may therefore, in some example embodiments, be configured to implement embodiments of the present invention on a single chip or as a single "system on a chip." As another example, in some example embodiments, the terminal apparatus 102 may comprise component(s) configured to implement embodiments of the present invention on a single chip or as a single "system on a chip." As such, in some cases, a chip or chipset may constitute means for performing one or more operations for providing the functionalities described herein and/or for enabling user interface navigation with respect to the functionalities and/or services described herein.

The processor 110 may, for example, be embodied as various means comprising one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 3 as a single processor, in some embodiments the processor 110 comprises a plurality of processors. The plurality of processors may be in operative communication with each other and may be collectively configured to perform one or more functionalities of the terminal apparatus 102 as described herein. The plurality of processors may be embodied on a single computing device or distributed across a plurality of computing devices collectively configured to function as the terminal apparatus 102. In embodiments wherein the terminal apparatus 102 is embodied as a mobile terminal 10, the processor 110 may be embodied as or comprise the processor 20. In some example embodiments, the processor 110 is configured to execute instructions stored in the memory 112 or otherwise accessible to the processor 110. These instructions, when executed by the processor 110, may cause the terminal apparatus 102 to perform one or more of the functionalities of the terminal apparatus 102 as described herein. As such, whether configured by hardware or software methods, or by a combination thereof, the processor 110 may comprise an entity capable of performing operations according to embodiments of the present invention while configured accordingly. Thus, for example, when the processor 110 is embodied as an ASIC, FPGA or the like, the processor 110 may comprise specifically configured hardware for conducting one or more operations described herein. Alternatively, as another example, when the processor 110 is embodied as an executor of instructions, such as may be stored in the memory 112, the instructions may specifically configure the processor 110 to perform one or more algorithms and operations described herein.

The memory 112 may comprise, for example, volatile memory, non-volatile memory, or some combination thereof. In this regard, the memory 112 may comprise one or more tangible and/or non-transitory computer-readable storage media that may include volatile and/or non-volatile memory. Although illustrated in FIG. 3 as a single memory, the memory 112 may comprise a plurality of memories. The plurality of memories may be embodied on a single computing device or may be distributed across a plurality of computing devices collectively configured to function as the terminal apparatus 102. In various example embodiments, the memory 112 may comprise a hard disk, random access memory, cache memory, flash memory, a compact disc read only memory (CD-ROM), digital versatile disc read only memory (DVD-ROM), an optical disc, circuitry configured to store information, or some combination thereof. In embodiments wherein the terminal apparatus 102 is embodied as a mobile terminal 10, the memory 112 may comprise the volatile memory 40 and/or the non-volatile memory 42. The memory 112 may be configured to store information, data, applications, instructions, or the like for enabling the terminal apparatus 102 to carry out various functions in accordance with various example embodiments. For example, in some example embodiments, the memory 112 is configured to buffer input data for processing by the processor 110. Additionally or alternatively, the memory 112 may be configured to store program instructions for execution by the processor 110. The memory 112 may store information in the form of static and/or dynamic information. This stored information may be stored and/or used by the alert provisioning circuitry 118 during the course of performing its functionalities.

The communication interface 114 may be embodied as any device or means embodied in circuitry, hardware, a computer program product comprising computer readable program instructions stored on a computer readable medium (for example, the memory 112) and executed by a processing device (for example, the processor 110), or a combination thereof that is configured to receive and/or transmit data from/to another computing device. In an example embodiment, the communication interface 114 is at least partially embodied as or otherwise controlled by the processor 110. In this regard, the communication interface 114 may be in communication with the processor 110, such as via a bus. The communication interface 114 may comprise, for example, an antenna, a transmitter, a receiver, a transceiver and/or supporting hardware or software for enabling communications with one or more remote computing devices. The communication interface 114 may be configured to receive and/or transmit data using any protocol that may be used for communications between computing devices. In this regard, the communication interface 114 may be configured to receive and/or transmit data using any protocol that may be used for transmission of data over a wireless network, wireline network, some combination thereof, or the like by which the terminal apparatus 102 and one or more computing devices or computing resources may be in communication. As an example, the communication interface 114 may be configured to enable communication between the terminal apparatus 102 and another device, such as another terminal apparatus 102. As a further example, the communication interface 114 may be configured to enable communication with another terminal apparatus 102, a serving network apparatus 104, and/or a public warning system apparatus 150 via the network 106, a radio uplink, an air interface, and/or the like. The communication interface 114 may additionally be in communication with the memory 112, user interface 116, and/or alert provisioning circuitry 118, such as via a bus.

The user interface 116 may be in communication with the processor 110 to receive an indication of a user input and/or to provide an audible, visual, mechanical, or other output to a user. As such, the user interface 116 may comprise, for example, a keyboard, a mouse, a joystick, a display, a touch screen display, a microphone, a speaker, and/or other input/output mechanisms. In embodiments wherein the user interface 116 comprises a touch screen display, the user interface 116 may additionally be configured to detect and/or receive indication of a touch gesture or other input to the touch screen display. The user interface 116 may be in communication with the memory 112, communication interface 114, and/or alert provisioning circuitry 118, such as via a bus.

The alert provisioning circuitry 118 may be embodied as various means, such as circuitry, hardware, a computer program product comprising computer readable program instructions stored on a computer readable medium (for example, the memory 112) and executed by a processing device (for example, the processor 110), or some combination thereof and, in some embodiments, is embodied as or otherwise controlled by the processor 110. In embodiments wherein the alert provisioning circuitry 118 is embodied separately from the processor 110, the alert provisioning circuitry 118 may be in communication with the processor 110. The alert provisioning circuitry 118 may further be in communication with one or more of the memory 112, communication interface 114, or user interface 116, such as via a bus.

In some example embodiments, the alert provisioning circuitry 118 may be configured to provide for connection with a network service according to a given network standard. For example, the alert provisioning circuitry 118 may be configured to provide for connection to a network service operating according to the LTE or E-UTRAN standard.

According to various embodiments, the alert provisioning circuitry 118 may be configured to register with a public warning system apparatus 150. In this regard, the alert provisioning circuitry 118 may be configured to register by providing for transmission of a registration message to the public warning system apparatus 150, in some instances via a serving network apparatus 104. The registration message may comprise an identity of the terminal apparatus 102 associated with the alert provisioning circuitry 118. For example, the identity may comprise an Electronic Serial Number (ESN), an International Mobile Equipment Identity (IMEI), or an International Mobile Subscriber Identity (IMSI) of the terminal apparatus 102. The registration message may further comprise an indication of the location of the terminal apparatus 102 associated with the alert provisioning circuitry 118. For example, the location may be indicated by Global Positioning System (GPS) coordinates of the terminal apparatus 102, such as latitudinal and longitudinal coordinates, or by the physical Cell ID of the currently serving network apparatus 104 (e.g., an eNodeB) of the terminal apparatus 102.

In example embodiments, during or after the registration process, the alert provisioning circuitry 118 may be configured to exchange security information with the public warning system apparatus 150, in some instances via a serving network apparatus 104. In this regard, the alert provisioning circuitry 118 may be configured to transmit or receive information that may later be used to authenticate warning messages from the public warning system apparatus 150. The security information may be related to, for example, public key cryptography or symmetric key cryptography. For example, the alert provisioning circuitry 118 may exchange a public key, shared key, secret code, digital certificate, and/or the like with the public warning system apparatus 150. In some embodiments, the exchanged security information may be signed by a trusted source for additional security.

The alert provisioning circuitry 118, in some embodiments, may further be configured to receive a warning message from a public warning system apparatus 150, in some instances via a serving network apparatus 104. According to various embodiments, the warning message may be a separate dedicated message for indicating a warning. In other embodiments, the warning message may be any message or communication received by the alert provisioning circuitry 118 comprising a warning flag, or other type of identifier, to indicate that the message is indicating a warning. The alert provisioning circuitry 118 may be configured to recognize both dedicated warning messages and other messages containing a warning flag or indication.

According to various embodiments, the warning message may comprise an indication of a behavior code. In certain embodiments, the behavior code may indicate the type of disaster for which the warning message is being sent. For example, the behavior code may indicate that the warning message relates to a fire, flood, earthquake, tsunami, tornado, hurricane, nuclear disaster, or the like. In this regard, the behavior code may indicate which disaster alert should be provided by the alert provisioning circuitry 118. For example, if the warning message relates to an approaching tsunami, the behavior code may indicate that a tsunami alert be provided by the alert provisioning circuitry 118. In some example embodiments, the behavior code may further indicate which alert(s) of a plurality of alerts related to a type of disaster should be provided, such as one or more particular types of alerts. For example, the behavior code may not only indicate that a tsunami alert be issued, but also it may further indicate that the tsunami alert include visual alerts (e.g. flashing lights) as well as audible alerts (e.g. siren(s)).

According to various embodiments, the alert provisioning circuitry 118 may be configured to authenticate the warning message. The alert provisioning circuitry 118 may be configured to authenticate the warning message before providing any alerts or forwarding the warning message to any other entities. In this regard, the alert provisioning circuitry 118 may be configured to authenticate the warning message using any of a number of known verification and authentication processes. In some embodiments, the alert provisioning circuitry 118 may use the security information exchanged during or after the registration process to authenticate the warning message. For example, the warning message may be signed (e.g. by the public warning system apparatus 150) using a Public Key Infrastructure (PKI), and the alert provisioning circuitry 118 may authenticate the warning message using one or more public and private keys.

In example embodiments, the alert provisioning circuitry 118 may be configured to provide an alert after authenticating the warning message. The alert may comprise any type of alert for warning of a disaster. For example, the alert may comprise an audible alert, such as via a speaker (e.g. a public speaker system), an alarm (e.g. a fire alarm), a siren (e.g. a tsunami siren), or the like. The alert may also comprise a visual alert, such as a light-emitting warning (e.g. a flashing warning beacon), or the like. In embodiments where the terminal apparatus 102 corresponding to the alert provisioning circuitry 118 is embodied as a mobile device, the alert may be in the form of a voice alert (e.g. a phone call, a voicemail, etc.), a text alert (e.g. a text message, e-mail, etc.), a haptic alert (e.g. a vibration), and/or the like.

According to various embodiments, the alert provisioning circuitry 118 may be configured to provide the alert for a defined period of time. The period of time may be pre-determined or pre-set in the terminal apparatus corresponding to the alert provisioning circuitry 118. In some embodiments, the warning message may comprise an indication of a time duration for which to provide the alert.

In some embodiments, the alert provisioning circuitry 118 may be further configured to provide for transmission of the warning message to additional entities. For example, the alert provisioning circuitry 118 may be configured to provide for transmission of the warning message to additional terminal apparatuses in the same or neighboring network. In embodiments where the terminal apparatus 102 corresponding to the alert provisioning circuitry 118 is embodied as a warning device (e.g. fire alarm, tsunami siren, etc.), the alert provisioning circuitry 118 may be configured to provide for transmission of the warning message to one or more terminal apparatuses 102 associated with the warning device. For example, one or more terminal apparatuses 102 may be associated (e.g. registered) with the warning device such that the terminal apparatuses 102 will be configured to receive the warning messages from the warning device.

According to various embodiments, after authenticating the warning message, the alert provisioning circuitry 118 may be configured to report a status to the public warning system apparatus 150, in some instances via a serving network apparatus 104. The status report may comprise an indication of the identity of the terminal apparatus 102 corresponding to the alert provisioning circuitry 118. The status report may further comprise an indication of a location of the terminal apparatus 102 corresponding to the alert provisioning circuitry 118. In example embodiments, the alert provisioning circuitry 118 may be configured to provide the status report on a periodic basis, for example every five minutes after authenticating the warning message. In other embodiments, the alert provisioning circuitry 118 may be configured to provide a status report in response to receiving a request for the response, for example from a public warning system apparatus 150, in some instances via a serving network apparatus 104.

In some embodiments, the alert provisioning circuitry 118 may be configured to receive a warning termination message from a public warning system apparatus 150, in some instances via a serving network apparatus 104. According to various embodiments, the warning termination message may be a separate dedicated message for indicating the termination of a warning. In other embodiments, the warning termination message may be any message or communication received by the alert provisioning circuitry 118 comprising a warning termination flag, or other type of identifier, to indicate that the message is indicating a warning has been terminated. The alert provisioning circuitry 118 may be configured to recognize both dedicated warning termination messages and other messages containing a warning termination flag or indication.

In some embodiments, the warning termination message may indicate that the alert may be terminated and the terminal apparatus 102 corresponding to the alert provisioning circuitry 118 may return to normal operation. According to certain embodiments, the alert provisioning circuitry 118 may be configured to authenticate the warning termination message. In this regard, any verifiable authentication process may be used, for example, any of the processes described above with respect to the warning message. According to example embodiments, the warning termination message may comprise an indication of a time duration or an expiration time, similar to the one described above with respect to the warning message.

After authenticating the warning termination message, in some embodiments, the alert provisioning circuitry 118 may be configured to terminate the alert and return to normal operation. According to example embodiments, the alert provisioning circuitry 118 may further be configured to provide for transmission of the warning termination message to additional entities, for example, as described above with respect to the warning message. The warning termination message may additionally comprise an indication of a maximum number of hops that the warning termination message may take during distribution of the message. In this regard, the maximum number of hops may help ensure that the warning termination message does not continue being distributed repeatedly over time.

Figure 3 further illustrates a block diagram of a serving network apparatus 104 according to an example embodiment. In the example embodiment, the serving network apparatus 104 comprises various means for performing the various functions herein described. These means may comprise one or more of a processor 120, memory 122, communication interface 124, or warning distribution circuitry 126. The means of the serving network apparatus 104 as described herein may be embodied as, for example, circuitry, hardware elements (e.g., a suitably programmed processor, combinational logic circuit, and/or the like), a computer program product comprising computer-readable program instructions (e.g., software or firmware) stored on a computer-readable medium (e.g., memory 122) that is executable by a suitably configured processing device (e.g., the processor 120), or some combination thereof.

The serving network apparatus 104 may comprise any computing device, mobile or fixed, and may be embodied as a server, desktop computer, laptop computer, mobile terminal 10, and/or the like configured to provide network side services. The serving network apparatus 104 may also be embodied as a combination of a plurality of computing devices configured to provide network side services. In this regard, the serving network apparatus 104 may be embodied, for example, as a server cluster and/or may be embodied as a distributed computing system, which may be distributed across a plurality of computing devices, such as, for example, mobile terminals. According to various embodiments, the serving network apparatus 104 may be embodied as an access point, a base station, such as a NodeB, evolved NodeB (eNB), Home eNB (H(e)NB), or the like. In example embodiments, the serving network apparatus 104 may be embodied as a gateway of a service provider. For example, the serving network apparatus 104 may be embodied as a 3GPP PDN Gateway, a GGSN, a WiMAX CSN Gateway, or the like. In some embodiments, the serving network apparatus 104 may be located a single hop from a terminal apparatus 102.

In some example embodiments, one or more of the means of the serving network apparatus 104 illustrated in FIG. 3 may be embodied as a chip or chip set. In other words, the serving network apparatus 104 may comprise one or more physical packages (for example, chips) comprising materials, components and/or wires on a structural assembly (for example, a baseboard). The structural assembly may provide physical strength, conservation of size, and/or limitation of electrical interaction for component circuitry included thereon. In this regard, the processor 120, memory 122, communication interface 124, and/or warning distribution circuitry 126 may be embodied as a chip or chip set. The serving network apparatus 104 may therefore, in some example embodiments, be configured to implement embodiments of the present invention on a single chip or as a single "system on a chip." As another example, in some example embodiments, the serving network apparatus 104 may comprise component(s) configured to implement embodiments of the present invention on a single chip or as a single "system on a chip." As such, in some cases, a chip or chipset may constitute means for performing one or more operations for providing the functionalities described herein.

The processor 120 may, for example, be embodied as various means comprising one or more microprocessors with accompanying digital signal processor(s), one or more processor(s) without an accompanying digital signal processor, one or more coprocessors, one or more multi-core processors, one or more controllers, processing circuitry, one or more computers, various other processing elements comprising integrated circuits such as, for example, an ASIC (application specific integrated circuit) or FPGA (field programmable gate array), or some combination thereof. Accordingly, although illustrated in FIG. 3 as a single processor, in some embodiments the processor 120 comprises a plurality of processors. The plurality of processors may be in operative communication with each other and may be collectively configured to perform one or more functionalities of the serving network apparatus 104 as described herein. The plurality of processors may be embodied on a single computing device or distributed across a plurality of computing devices collectively configured to function as the serving network apparatus 104. In some example embodiments, the processor 120 is configured to execute instructions stored in the memory 122 or otherwise accessible to the processor 120. These instructions, when executed by the processor 120, may cause the serving network apparatus 104 to perform one or more of the functionalities of the serving network apparatus 104 as described herein. As such, whether configured by hardware or software methods, or by a combination thereof, the processor 120 may comprise an entity capable of performing operations according to embodiments of the present invention while configured accordingly. Thus, for example, when the processor 120 is embodied as an ASIC, FPGA or the like, the processor 120 may comprise specifically configured hardware for conducting one or more operations described herein. Alternatively, as another example, when the processor 120 is embodied as an executor of instructions, such as may be stored in the memory 122, the instructions may specifically configure the processor 120 to perform one or more algorithms and operations described herein.

The memory 122 may comprise, for example, volatile memory, non-volatile memory, or some combination thereof. In this regard, the memory 122 may comprise a non-transitory computer-readable storage medium. Although illustrated in FIG. 3 as a single memory, the memory 122 may comprise a plurality of memories. The plurality of memories may be embodied on a single computing device or may be distributed across a plurality of computing devices collectively configured to function as the serving network apparatus 104. In various example embodiments, the memory 122 may comprise a hard disk, random access memory, cache memory, flash memory, a compact disc read only memory (CD-ROM), digital versatile disc read only memory (DVD-ROM), an optical disc, circuitry configured to store information, or some combination thereof. The memory 122 may be configured to store information, data, applications, instructions, or the like for enabling the serving network apparatus 104 to carry out various functions in accordance with various example embodiments. For example, in some example embodiments, the memory 122 is configured to buffer input data for processing by the processor 120. Additionally or alternatively, the memory 122 may be configured to store program instructions for execution by the processor 120. The memory 122 may store information in the form of static and/or dynamic information. This stored information may be stored and/or used by the warning distribution circuitry 126 during the course of performing its functionalities.

The communication interface 124 may be embodied as any device or means embodied in circuitry, hardware, a computer program product comprising computer readable program instructions stored on a computer readable medium (for example, the memory 122) and executed by a processing device (for example, the processor 120), or a combination thereof that is configured to receive and/or transmit data from/to another computing device. In an example embodiment, the communication interface 124 is at least partially embodied as or otherwise controlled by the processor 120. In this regard, the communication interface 124 may be in communication with the processor 120, such as via a bus. The communication interface 124 may include, for example, an antenna, a transmitter, a receiver, a transceiver and/or supporting hardware or software for enabling communications with one or more remote computing devices. The communication interface 124 may be configured to receive and/or transmit data using any protocol that may be used for communications between computing devices. In this regard, the communication interface 124 may be configured to receive and/or transmit data using any protocol that may be used for transmission of data over a wireless network, wireline network, some combination thereof, or the like by which the serving network apparatus 104 and one or more computing devices or computing resources may be in communication. As an example, the communication interface 124 may be configured to enable communication with another serving network apparatus 104, a terminal apparatus 102, and/or a public warning system apparatus 150 by the network 106, a radio uplink, an air interface, and/or the like. The communication interface 124 may additionally be in communication with the memory 122, and/or warning distribution circuitry 126, such as via a bus.

The warning distribution circuitry 126 may be embodied as various means, such as circuitry, hardware, a computer program product comprising computer readable program instructions stored on a computer readable medium (for example, the memory 122) and executed by a processing device (for example, the processor 120), or some combination thereof and, in some embodiments, is embodied as or otherwise controlled by the processor 120. In embodiments wherein the warning distribution circuitry 126 is embodied separately from the processor 120, the warning distribution circuitry 126 may be in communication with the processor 120. The warning distribution circuitry 126 may further be in communication with one or more of the memory 122 or communication interface 124, such as via a bus.

According to various embodiments, the warning distribution circuitry 126 may be configured to receive a warning message from a public warning system apparatus 150 and distribute the warning message to one or more terminal apparatuses 102, one or more additional serving network apparatuses 104, and/or one or more additional public warning system apparatuses 150. Similarly, the warning distribution circuitry 126 may be further configured to receive a warning termination message from a public warning system apparatus 150 and distribute the warning termination message to one or more terminal apparatuses 102, one or more additional serving network apparatuses 104, and/or one or more additional public warning system apparatuses 150. According to example embodiments, the warning distribution circuitry 126 may be configured to distribute warning messages to terminal apparatuses 102 configured to operate as dedicated warning devices prior to distributing warning messages to other terminal apparatuses 102, such as personal mobile devices. In some embodiments, the warning distribution circuitry 126 may be configured to distribute the warning messages and warning termination messages via a broadcast message, peer-to-peer (P2P) message, and/or the like.

In some embodiments, the warning distribution circuitry 126 may be configured to establish and respect a high priority for warning messages and warning termination messages. The warning distribution circuitry 126 may further be configured to establish and respect a high priority for one or more terminal apparatuses 102, such as terminal apparatuses 102 configured to operate as dedicated warning devices. According to some embodiments, the warning distribution circuitry 126 may be configured to designate some or all of the remaining network traffic and entities as low priority in comparison to the warning traffic and entities. In some instances, the warning distribution circuitry 126 may be configured to completely restrict certain traffic and entities during such time as a disaster. For example, the warning distribution circuitry 126 may operate according to emergency communication standards in order to avoid network overload or prevent jamming of the network.

Figure 3 further illustrates a block diagram of a public warning system apparatus 150 according to an example embodiment. In the example embodiment, the public warning system apparatus 150 comprises various means for performing the various functions herein described. These means may comprise one or more of a processor 130, memory 132, communication interface 134, or warning control circuitry 136. The means of the public warning system apparatus 150 as described herein may be embodied as, for example, circuitry, hardware elements (e.g., a suitably programmed processor, combinational logic circuit, and/or the like), a computer program product comprising computer-readable program instructions (e.g., software or firmware) stored on a computer-readable medium (e.g., memory 132) that is executable by a suitably configured processing device (e.g., the processor 130), or some combination thereof.

In some example embodiments, one or more of the means of the public warning system apparatus 150 illustrated in FIG. 3 may be embodied as a chip or chip set. In other words, the public warning system apparatus 150 may comprise one or more physical packages (for example, chips) comprising materials, components and/or wires on a structural assembly (for example, a baseboard). The structural assembly may provide physical strength, conservation of size, and/or limitation of electrical interaction for component circuitry included thereon. In this regard, the processor 130, memory 132, communication interface 134, and/or warning control circuitry 136 maybe embodied as a chip or chip set. The public warning system apparatus 150 may therefore, in some example embodiments, be configured to implement embodiments of the present invention on a single chip or as a single "system on a chip." As another example, in some example embodiments, the public warning system apparatus 150 may comprise component(s) configured to implement embodiments of the present invention on a single chip or as a single "system on a chip." As such, in some cases, a chip or chipset may constitute means for performing one or more operations for providing the functionalities described herein.

The processor 130 may, for example, be embodied as various means comprising one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 3 as a single processor, in some embodiments the processor 130 comprises a plurality of processors. The plurality of processors may be in operative communication with each other and may be collectively configured to perform one or more functionalities of the public warning system apparatus 150 as described herein. The plurality of processors may be embodied on a single computing device or distributed across a plurality of computing devices collectively configured to function as the serving network apparatus 104. In some example embodiments, the processor 130 is configured to execute instructions stored in the memory 132 or otherwise accessible to the processor 130. These instructions, when executed by the processor 130, may cause the public warning system apparatus 150 to perform one or more of the functionalities of the public warning system apparatus 150 as described herein. As such, whether configured by hardware or software methods, or by a combination thereof, the processor 130 may comprise an entity capable of performing operations according to embodiments of the present invention while configured accordingly. Thus, for example, when the processor 130 is embodied as an ASIC, FPGA or the like, the processor 130 may comprise specifically configured hardware for conducting one or more operations described herein. Alternatively, as another example, when the processor 130 is embodied as an executor of instructions, such as may be stored in the memory 132, the instructions may specifically configure the processor 130 to perform one or more algorithms and operations described herein.

The memory 132 may comprise, for example, volatile memory, non-volatile memory, or some combination thereof. In this regard, the memory 132 may comprise a non-transitory computer-readable storage medium. Although illustrated in FIG. 3 as a single memory, the memory 132 may comprise a plurality of memories. The plurality of memories may be embodied on a single computing device or may be distributed across a plurality of computing devices collectively configured to function as the public warning system apparatus 150. In various example embodiments, the memory 132 may comprise a hard disk, random access memory, cache memory, flash memory, a compact disc read only memory (CD-ROM), digital versatile disc read only memory (DVD-ROM), an optical disc, circuitry configured to store information, or some combination thereof. The memory 132 may be configured to store information, data, applications, instructions, or the like for enabling the public warning system apparatus 150 to carry out various functions in accordance with various example embodiments. For example, in some example embodiments, the memory 132 is configured to buffer input data for processing by the processor 130. Additionally or alternatively, the memory 132 may be configured to store program instructions for execution by the processor 130. The memory 132 may store information in the form of static and/or dynamic information. This stored information may be stored and/or used by the warning control circuitry 136 during the course of performing its functionalities.

The communication interface 134 may be embodied as any device or means embodied in circuitry, hardware, a computer program product comprising computer readable program instructions stored on a computer readable medium (for example, the memory 132) and executed by a processing device (for example, the processor 130), or a combination thereof that is configured to receive and/or transmit data from/to another computing device. In an example embodiment, the communication interface 134 is at least partially embodied as or otherwise controlled by the processor 130. In this regard, the communication interface 134 may be in communication with the processor 130, such as via a bus. The communication interface 134 may include, for example, an antenna, a transmitter, a receiver, a transceiver and/or supporting hardware or software for enabling communications with one or more remote computing devices. The communication interface 134 may be configured to receive and/or transmit data using any protocol that may be used for communications between computing devices. In this regard, the communication interface 134 may be configured to receive and/or transmit data using any protocol that may be used for transmission of data over a wireless network, wireline network, some combination thereof, or the like by which the public warning system apparatus 130 and one or more computing devices or computing resources may be in communication. As an example, the communication interface 134 may be configured to enable communication with another public warning system apparatus 150, a terminal apparatus 102, and/or a serving network apparatus 104 by the network 106, a radio uplink, an air interface, and/or the like. The communication interface 134 may additionally be in communication with the memory 132, and/or warning control circuitry 136, such as via a bus.

The warning control circuitry 136 may be embodied as various means, such as circuitry, hardware, a computer program product comprising computer readable program instructions stored on a computer readable medium (for example, the memory 132) and executed by a processing device (for example, the processor 130), or some combination thereof and, in some embodiments, is embodied as or otherwise controlled by the processor 130. In embodiments wherein the warning control circuitry 136 is embodied separately from the processor 130, the warning control circuitry 136 may be in communication with the processor 130. The warning control circuitry 136 may further be in communication with one or more of the memory 132 or communication interface 134, such as via a bus.

According to various embodiments, the warning control circuitry 136 may be configured to receive and store registration information from one or more terminal apparatuses 102, in some instances via a serving network apparatus 104. For example, the warning control circuitry 136 may be configured to provide for storage of identity and/or location information related to one or more terminal apparatuses 102. The warning control circuitry 136 may be further configured to exchange security information with one or more terminal apparatuses 102. In this regard, the warning control circuitry 136 may generate and/or distribute, for example, a public key, a shared key, a secret code, a digital certificate, and/or the like. The exchanged security information may allow the warning control circuitry 136 to verify and authenticate messages received from a terminal apparatus 102, and the exchanged security information may further allow a terminal apparatus 102 to verify and authenticate messages received from the warning control circuitry 136.

In some embodiments, the warning control circuitry 136 may be configured to receive an indication or a warning from a warning sensor device. For example, the warning sensor device may comprise a seismograph, water level detector, smoke detector, or the like. The warning control circuitry 136, in example embodiments, may be further configured to receive an indication to terminate a warning from a warning sensor device.

Similar to the processes described above with respect to terminal apparatuses 102, the warning control circuitry 136 may be configured to register warning sensor devices as well as verify and authenticate the warnings received from the warning sensor devices. In some embodiments, the warning sensor devices may be embodied as terminal apparatuses 102. In other embodiments, the warning sensor devices may have means for communicating with a public warning system apparatus 150, in some instances via a serving network apparatus 104. After receiving the warning from a warning sensor device, the warning control circuitry 136 may be configured to generate and distribute a warning message to one or more serving network apparatuses 104 and/or one or more terminal apparatuses 102. Similarly, the warning control circuitry 136 may be further configured to generate and distribute a warning termination message after receiving an indication to terminate a warning from a warning sensor device.

According to various embodiments, the warning control circuitry 136 may be configured to set or request a high priority status for traffic and entities related to the warning and distribution of the warning. The warning control circuitry 136 may be further configured to set or request a low priority status for traffic and entities unrelated to the warning and distribution of the warning. In some instances, the warning control circuitry 136 may be configured to request that certain traffic or entities be prevented or blocked during a disaster. The warning control circuitry 136 may further be configured, in certain instances, to request that to terminal apparatuses 102 configured to operate as dedicated warning devices receive the warning messages and warning termination messages prior to distributing them to other terminal apparatuses 102, such as personal mobile devices.

In certain embodiments, the warning control circuitry 136 may be configured to receive one or more status report messages from one or more terminal apparatuses 102, in some instances via a serving network apparatus 104. The warning control circuitry 136 may, in some instances, be configured to request status reports from one or more terminal apparatuses 102. The warning control circuitry 136 may be further configured to determine one or more locations from which one or more terminal apparatuses 102 are failing to provide status reports. The warning control circuitry 136 may be configured to use the stored locations of the one or more registered terminal apparatuses 102 to determine which terminal apparatuses 102 are failing to send a status report. In this regard, the warning control circuitry 136 may be configured to determine one or more areas that are potentially affected by the disaster (i.e. damaged severely enough to disable the terminal apparatuses 102 in that area that should be reporting their status). The warning control circuitry 136 may, in certain embodiments, be configured to cause dispatch of assistance to the one or more areas from which limited status reports are received from terminal apparatuses 102.

According to various embodiments, the public warning system may be configured to distribute warning messages hierarchically. For example, a public warning system apparatus 150 may distribute a warning message to one or more serving network apparatuses 104 (e.g. eNBs). The serving network apparatuses 104 may distribute the warning messages to one or more additional serving network apparatuses and/or one or more terminal apparatuses 102 (e.g. warning devices). The one or more terminal apparatuses 102 may distribute the warning messages to one or more additional terminal apparatuses (e.g. personal mobile devices) and/or serving terminal apparatuses 104 (e.g. H(e)NBs or femtocells). The distribution process may continue until all necessary entities receive the warning messages. In some embodiments, the coverage area for the warning messages may be large. In this regard, the large coverage area may be treated as many smaller local coverage areas. For example, each local coverage area may comprise a public warning system apparatus 150 and associated warning sensor devices, serving network apparatuses 104, and terminal apparatuses 102. The large coverage area may, for example, comprise one or more of the local coverage area systems.

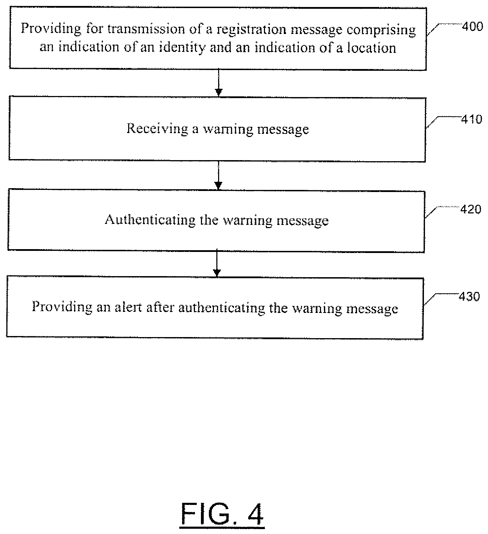

FIG. 4 illustrates a flowchart according to an example method for providing a secure public warning related to a disaster according to an example embodiment. In this regard, FIG. 4 illustrates operations that may be performed at a terminal apparatus 104. The operations illustrated in and described with respect to FIG. 4 may, for example, be performed by, with the assistance of, and/or under the control of one or more of the processor 110, memory 112, communication interface 114, user interface 116, or alert provisioning circuitry 118. Operation 400 may comprise providing for transmission of a registration message. The registration message may comprise an indication of an identity and an indication of a location. The processor 110, memory 112, communication interface 114, user interface 116, or alert provisioning circuitry 118 may, for example, provide means for performing operation 400. Operation 410 may comprise receiving a warning message provided by one or more public warning system apparatuses 150. The processor 110, memory 112, communication interface 114, user interface 116, or alert provisioning circuitry 118 may, for example, provide means for performing operation 410. Operation 420 may comprise authenticating the warning message. The processor 110, memory 112, communication interface 114, user interface 116, or alert provisioning circuitry 118 may, for example, provide means for performing operation 420. Operation 430 may comprise providing an alert after authenticating the warning message. The processor 110, memory 112, communication interface 114, user interface 116, or alert provisioning circuitry 118 may, for example, provide means for performing operation 430.

FIG. 4 illustrates a flowchart of a system, method, and computer program product according to example embodiments of the invention. It will be understood that each block of the flowchart, and combinations of blocks in the flowchart, may be implemented by various means, such as hardware and/or a computer program product comprising one or more computer-readable mediums (as opposed to a computer-readable transmission medium which describes a propagating signal) having one or more computer program code instructions, program instructions, or executable computer-readable program code instructions stored therein. For example, one or more of the procedures described herein may be embodied by computer program instructions of a computer program product. In this regard, the computer program product(s) that embodies the procedures described herein may be stored by one or more memory devices (e.g., memory 112, volatile memory 40, or non-volatile memory 42) of a mobile terminal, server, public warning system apparatus, or other computing device (e.g. the terminal apparatus 102) and executed by a processor (e.g. the processor 110 or processor 20) in the computing device. In some embodiments, the computer program instructions comprising the computer program product(s) that embodies the procedures described above may be stored by memory devices of a plurality of computing devices. As will be appreciated, any such computer program product may be loaded onto a computer or other programmable apparatus to produce a machine, such that the computer program product comprising the instructions which execute on the computer or other programmable apparatus creates means for implementing the functions specified in the flowchart block(s).

Further, the computer program product may comprise one or more computer-readable memories on which the computer program instructions may be stored such that the one or more computer-readable memories can direct a computer or other programmable apparatus to function in a particular manner, such that the computer program product comprises an article of manufacture which implements the function specified in the flowchart block(s). The computer program instructions of one or more computer program products may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart block(s). Retrieval, loading, and execution of the program code instructions may be performed sequentially such that one instruction is retrieved, loaded, and executed at a time. In some example embodiments, retrieval, loading and/or execution may be performed in parallel such that multiple instructions are retrieved, loaded, and/or executed together.

Accordingly, execution of instructions associated with the operations of the flowchart by a processor, or storage of instructions associated with the blocks or operations of the flowchart in a computer-readable storage medium, support combinations of operations for performing the specified functions. It will also be understood that one or more operations of the flowchart, and combinations of blocks or operations in the flowchart, may be implemented by special purpose hardware-based computer systems and/or processors which perform the specified functions, or combinations of special purpose hardware and program code instructions.

The above described functions may be carried out in many ways. For example, any suitable means for carrying out each of the functions described above may be employed to carry out embodiments of the invention. In one embodiment, a suitably configured processor (for example, the processor 110, processor 120, and/or processor 130) may provide all or a portion of the elements of the invention. In another embodiment, all or a portion of the elements of the invention may be configured by and operate under control of a computer program product. The computer program product for performing the methods of embodiments of the invention comprises a computer-readable storage medium, such as the non-volatile storage medium (for example, the memory 112, memory 122, and/or memory 132), and computer-readable program code portions, such as a series of computer instructions, embodied in the computer-readable storage medium.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

## Claims

1. A method comprising:
providing (400) for transmission by a terminal apparatus (102) of a registration message, wherein the registration message comprises an indication of an identity and an indication of a location of the terminal apparatus (102); receiving (410) a warning message at the terminal apparatus (102); authenticating (420) the warning message;
providing (430) an alert after authenticating the warning message,
**characterized by**
providing for transmission by the terminal apparatus (102) of a status report message after successfully authenticating the warning message.

2. The method of Claim 1, wherein the warning message further comprises an indication of a behavior code, the behavior code identifying the alert to provide.

3. The method of any of Claims 1-2, wherein the warning message further comprises an indication of a time duration of the warning message, and wherein providing an alert further comprises providing the alert for the time duration indicated in the warning message.

4. The method of any of Claims 1-3, wherein the status report message comprises an indication of a location of the terminal apparatus (102).

5. The method of any of Claims 1-4, wherein
the status report message is provided responsive to a request for the status report message.

6. The method of any of Claims 1-5 further comprising:
forwarding the warning message to one or more additional entities.

7. The method of any of Claims 1-6 further comprising:
receiving a warning termination message;
authenticating the warning termination message; and
terminating the alert after authenticating the warning termination message.

8. An apparatus (10) comprising:
means for providing for transmission of a registration message (14), wherein the registration message comprises an indication of an identity and an indication of a location;
means for receiving (16) a warning message;
means for authenticating (20) the warning message;
means for providing (22, 24) an alert after authenticating the warning message, **characterized by**
means for providing for transmission of a status report message (20b) after successfully authenticating the warning message.

9. The apparatus of Claim 8, wherein the warning message further comprises an indication of a behavior code, the behavior code identifying the alert to provide.

10. The apparatus of any of Claims 8-9, wherein the warning message further comprises an indication of a time duration of the warning message, and wherein the means for providing the alert comprise means for providing the alert for the time duration indicated in the warning message.

11. The apparatus of any of Claims 8-10, wherein the status report message comprises an indication of a location of the apparatus (10).

12. The apparatus of any of Claims 8-11, wherein:
the means for providing for the transmission of the status report message are configured to provide for the transmission of the status report message responsive to a request for the status report message.

13. The apparatus of any of Claims 8-12 further comprising:
means for forwarding the warning message to one or more additional entities.

14. The apparatus of any of Claims 8-13 further comprising:
means for receiving a warning termination message;
means for authenticating the warning termination message; and
means for terminating the alert after authenticating the warning termination message.

15. A computer program comprising instructions which, when executed by a terminal apparatus (102), cause said terminal apparatus (102) to carry out a method in accordance with at least one of claims 1-7.

## Patentansprüche

1. Verfahren, das Folgendes umfasst:
Bereitstellen (400) einer Übertragung durch eine Endgerätevorrichtung (102) einer Registrierungsnachricht, wobei die Registrierungsnachricht eine Anzeige einer Identität und eine Anzeige eines Standorts der Endgerätevorrichtung (102) umfasst;
Empfangen (410) einer Warnnachricht an der Endgerätevorrichtung (102);
Authentifizieren (420) der Warnnachricht;
Bereitstellen (430) eines Alarms nach dem Authentifizieren der Warnnachricht,
**gekennzeichnet durch**
Bereitstellen einer Übertragung durch die Endgerätevorrichtung (102) einer Statusberichtsnachricht nach dem erfolgreichen Authentifizieren der Warnnachricht.

2. Verfahren nach Anspruch 1, wobei die Warnnachricht ferner eine Anzeige eines Verhaltenscodes umfasst, wobei der Verhaltenscode den bereitzustellenden Alarm identifiziert.

3. Verfahren nach einem der Ansprüche 1-2, wobei die Warnnachricht ferner eine Anzeige einer Zeitdauer der Warnnachricht umfasst und wobei das Bereitstellen eines Alarms ferner das Bereitstellen des Alarms für die in der Warnnachricht angezeigte Zeitdauer umfasst.

4. Verfahren nach einem der Ansprüche 1-3, wobei die Statusberichtsnachricht eine Anzeige eines Standorts der Endgerätevorrichtung (102) umfasst.

5. Verfahren nach einem der Ansprüche 1-4, wobei die Statusberichtsnachricht in Reaktion auf eine Anforderung der Statusberichtsnachricht bereitgestellt wird.

6. Verfahren nach einem der Ansprüche 1-5, das ferner Folgendes umfasst:
Weiterleiten der Warnnachricht an eine oder mehrere zusätzliche Entitäten.

7. Verfahren nach einem der Ansprüche 1-6, das ferner Folgendes umfasst:
Empfangen einer Warnungsbeendigungsnachricht;
Authentifizieren der Warnungsbeendigungsnachricht und Beenden des Alarms nach dem Authentifizieren der Warnungsbeendigungsnachricht.

8. Vorrichtung (10), die Folgendes umfasst:
ein Mittel zum Bereitstellen einer Übertragung einer Registrierungsnachricht (14), wobei die Registrierungsnachricht eine Anzeige einer Identität und eine Anzeige eines Standorts umfasst;
ein Mittel zum Empfangen (16) einer Warnnachricht;
ein Mittel zum Authentifizieren (20) der Warnnachricht;
ein Mittel zum Bereitstellen (22, 24) eines Alarms nach dem Authentifizieren der Warnnachricht,
**gekennzeichnet durch**
ein Mittel zum Bereitstellen einer Übertragung einer Statusberichtsnachricht (20b) nach dem erfolgreichen Authentifizieren der Warnnachricht.

9. Vorrichtung nach Anspruch 8, wobei die Warnnachricht ferner eine Anzeige eines Verhaltenscodes umfasst, wobei der Verhaltenscode den bereitzustellenden Alarm identifiziert.

10. Vorrichtung nach einem der Ansprüche 8-9, wobei die Warnnachricht ferner eine Anzeige einer Zeitdauer der Warnnachricht umfasst und wobei das Mittel zum Bereitstellen des Alarms ein Mittel zum Bereitstellen des Alarms für die in der Warnnachricht angezeigte Zeitdauer umfasst.

11. Vorrichtung nach einem der Ansprüche 8-10, wobei die Statusberichtsnachricht eine Anzeige eines Standorts der Vorrichtung (10) umfasst.

12. Vorrichtung nach einem der Ansprüche 8-11, wobei:
das Mittel zum Bereitstellen der Übertragung der Statusberichtsnachricht dazu ausgelegt ist, die Übertragung der Statusberichtsnachricht in Reaktion auf eine Anforderung der Statusberichtsnachricht bereitzustellen.

13. Vorrichtung nach einem der Ansprüche 8-12, die ferner Folgendes umfasst:
ein Mittel zum Weiterleiten der Warnnachricht an eine oder mehrere zusätzliche Entitäten.

14. Vorrichtung nach einem der Ansprüche 8-13, die ferner Folgendes umfasst:
ein Mittel zum Empfangen einer Warnungsbeendigungsnachricht;
ein Mittel zum Authentifizieren der Warnungsbeendigungsnachricht und
ein Mittel zum Beenden des Alarms nach dem Authentifizieren der Warnungsbeendigungsnachricht.

15. Computerprogramm, das Anweisungen umfasst, die, wenn sie von einer Endgerätevorrichtung (102) ausgeführt werden, bewirken, dass die Endgerätevorrichtung (102) das Verfahren mindestens nach einem der Ansprüche 1-7 durchführt.

## Revendications

1. Procédé comprenant :
la fourniture (400) d'une transmission par un appareil terminal (102) d'un message d'enregistrement, dans lequel le message d'enregistrement comprend une indication d'une identité et une indication d'un emplacement de l'appareil terminal (102) ;
la réception (410) d'un message d'avertissement au niveau de l'appareil terminal (102) ;
l'authentification (420) du message d'avertissement ;
la fourniture (430) d'une alerte après l'authentification du message d'avertissement,
**caractérisé par**
la fourniture d'une transmission par l'appareil terminal (102) d'un message de rapport d'état après l'authentification réussie du message d'avertissement.

2. Procédé selon la revendication 1, dans lequel le message d'avertissement comprend en outre une indication d'un code de comportement, le code de comportement identifiant l'alerte à fournir.

3. Procédé selon l'une quelconque des revendications 1 et 2, dans lequel le message d'avertissement comprend en outre une indication d'une durée de temps du message d'avertissement, et dans lequel la fourniture d'une alerte comprend en outre la fourniture de l'alerte pendant la durée de temps indiquée dans le message d'avertissement.

4. Procédé selon l'une quelconque des revendications 1 à 3, dans lequel le message de rapport d'état comprend l'indication d'un emplacement de l'appareil terminal (102).

5. Procédé selon l'une quelconque des revendications 1 à 4, dans lequel
le message de rapport d'état est fourni en réponse à un message de demande de rapport d'état.

6. Procédé selon l'une quelconque des revendications 1 à 5, comprenant en outre :
l'acheminement du message d'avertissement jusqu'à une ou plusieurs entités supplémentaires.

7. Procédé selon l'une quelconque des revendications 1 à 6, comprenant en outre :
la réception d'un message d'arrêt d'avertissement ;
l'authentification du message d'arrêt d'avertissement ; et
l'arrêt de l'avertissement après l'authentification du message d'arrêt d'avertissement.

8. Appareil (10) comprenant :
un moyen de fourniture d'une transmission d'un message d'enregistrement (14), dans lequel le message d'enregistrement comprend une indication d'une identité et une indication d'un emplacement ;
un moyen de réception (16) d'un message d'avertissement ;
un moyen d'authentification (22, 24) du message d'avertissement ;
un moyen de fourniture (22, 24) d'une alerte après l'authentification du message d'avertissement,
**caractérisé par**
un moyen de fourniture (22, 24) d'une transmission d'un message de rapport d'état (20b) après l'authentification réussie du message d'avertissement.

9. Appareil selon la revendication 8, dans lequel le message d'avertissement comprend en outre une indication d'un code de comportement, le code de comportement identifiant l'alerte à fournir.

10. Appareil selon l'une quelconque des revendications 8 et 9, dans lequel le message d'avertissement comprend en outre une indication d'une durée de temps du message d'avertissement, et dans lequel le moyen de fourniture de l'alerte comprend un moyen de fourniture de l'alerte pendant la durée de temps indiquée dans le message d'avertissement.

11. Appareil selon l'une quelconque des revendications 8 à 10, dans lequel le message de rapport d'état comprend l'indication d'un emplacement de l'appareil (10).

12. Appareil selon l'une quelconque des revendications 8 à 11, dans lequel
les moyens de fourniture de la transmission du message de rapport d'état sont configurés pour fournir la transmission du message de rapport d'état en réponse à un message de demande du rapport d'état.

13. Appareil selon l'une quelconque des revendications 8 à 12, comprenant en outre :
un moyen d'acheminement du message d'avertissement jusqu'à une ou plusieurs entités supplémentaires.

14. Appareil selon l'une quelconque des revendications 8 à 13, comprenant en outre :
un moyen de réception d'un message d'arrêt d'avertissement ;
un moyen d'authentification du message d'arrêt d'avertissement ; et
un moyen d'arrêt de l'avertissement après l'authentification du message d'arrêt d'avertissement.

15. Programme informatique comprenant des instructions qui, à leur exécution par un appareil terminal (102), amènent ledit appareil terminal (102) à exécuter un procédé selon au moins l'une des revendications 1 à 7.
